# EUROPÄISCHE PATENTSCHRIFT

(11) **EP 1 149 927 B1**
(45) Veröffentlichungstag und Bekanntmachung des Hinweises auf die Patenterteilung: **06.10.2004**
(21) Anmeldenummer: 00108614.9
(22) Anmeldetag: 20.04.2000
(51) Int. Cl.: C22B 11/00, C02F 1/72

(54) **Verfahren zur Aufarbeitung eines Goldbades**
Method for the processing of a gold bath
Procédé pour le traitement d'un bain d'or

(43) Veröffentlichungstag der Anmeldung: 31.10.2001
(73) Patentinhaber: Wieland Dental + Technik GmbH & Co. KG, 75179 Pforzheim (DE)
(72) Erfinder: Mzyk, Waldemar, 76365 Calw (DE); Rübel, Susanne, 76307 Auerbach (DE)
(74) Vertreter: Patentanwälte Ruff, Wilhelm, Beier, Dauster & Partner

(56) Entgegenhaltungen:
- US-A- 4 092 154
- US-A- 4 416 786
- T. OKUBO ET AL.: "New Sumitomo Process for Gold Recovery from Copper Anode Slime" PROCEEDINGS OF THE 1984 AIME ANNUAL MEETING, Seiten 517-536, XP000952470

## Beschreibung

Die Erfindung betrifft in erster Linie ein Verfahren zur Aufarbeitung eines Goldbades oder eines Goldlegierungsbades, das Gold in Form eines Goldsulfit-Komplexes enthalten.

Gold oder Goldlegierungen werden für verschiedene Zwecke aus insbesondere wässrigen Lösungen, die das Gold und ggf. weitere Legierungsmetalle, meist in Form von Komplexen, enthalten (sogenannten Bädern), abgeschieden, und zwar meist auf galvanischem Weg, das heißt mit Strom. Unter anderem aufgrund ihrer geringen Toxizität gegenüber anderen Goldbädern, beispielsweise Goldcyanidbädern, haben sich vor allem auf dem Gebiet der dentalen Galvanotechnik Gold- oder Goldlegierungsbäder durchgesetzt, die das Gold in Form eines Goldsulfit-Komplexes enthalten. Es ist bekanntermaßen erwünscht, die beispielsweise in der Dentaltechnik nach der Abscheidung im Bad verbleibenden Restgoldgehalte wieder aufzubereiten und das dabei gewonnene Gold wieder zu verwerten.

In diesem Zusammenhang ist bereits seit längerem bekannt, Goldsulfitbäder auf galvanischem Wege aufzuarbeiten. Hierzu ist allerdings ein Galvanisiergerät bestehend aus Elektronik, Heizung, Galvanisiergefäß, Elektrodenanordnung, Rühreinrichtung etc. und eine für die Restgoldabscheidung geeignete Prozeßführung notwendig. Das noch im Komplex enthaltene Gold wird an der Kathode abgeschieden. Es können verschiedenste Kathodenmaterialien, wie beispielsweise ein Metall-, insbesondere Edelstahlstab, eine metallisierte, insbesondere vernickelte Kunststoffschwamm-Elektrode o.dgl. verwendet werden. Das abgeschiedene Gold ist dabei meist sehr fest mit der Elektrode verbunden (Metallstab) und muß mechanisch, beispielsweise durch Abkratzen, von dort gelöst werden oder liegt erst wieder nach der Scheidung als Feingold vor (Kunststoffschwamm-Elektrode). Vor allem bei hochkonzentrierten Goldsulfitbädern kann jedoch die Goldabscheidung aufgrund apparativer Gegebenheiten sehr aufwendig oder zeitintensiv, wenn nicht sogar unmöglich sein. Beispielsweise ist es dort oft schwierig und aufwendig, die Elektroden in das Bad einzubringen und dort geeignet anzuordnen. Somit stellt die galvanische Goldabscheidung häufig kein geeignetes Aufbereitungsverfahren dar. Ein weiterer Nachteil der galvanischen Restgoldabscheidung ist, daß evtl. im Bad enthaltene Legierungsbestandteile mit abgeschieden werden.

Die Erfindung stellt sich die Aufgabe, eine stromlose Aufarbeitung von Goldbädern bzw. Goldlegierungsbädern zu ermöglichen. Dabei soll insbesondere erreicht werden, daß die Wiederaufbereitung einfach handhabbar, selektiv und quantitativ durchführbar ist. Sie soll zu reinem Gold führen, da keine evtl. enthaltenen Legierungsmetalle mit ausfallen sollen. Das Verfahren soll für den Benutzer keine gesundheitlichen Risiken beinhalten und durch die Entsorgungsfreundlichkeit der Reaktionsprodukte ökologisch unbedenklich, vor allem aber kostengünstig sein.

Diese Aufgabe wird gelöst durch ein Verfahren mit den Merkmalen des Anspruches 1 und die Verwendung eines Oxidationsmittels nach den Merkmalen des Anspruches 14. Bevorzugte Ausführungen sind in den abhängigen Ansprüchen 2 bis 13 sowie 15 und 16, dargestellt. Der Wortlaut sämtlicher Ansprüche wird hiermit durch Bezugnahme zum Inhalt dieser Beschreibung gemacht.

Das eingangs genannte Verfahren zeichnet sich erfindungsgemäß dadurch aus, daß mindestens ein Oxidationsmittel zugegeben wird, daß das im Komplex enthaltene Sulfit oxidiert und das im Komplex enthaltene Gold zu seiner metallischen Form reduziert. Dabei wirkt also das zugegebene Oxidationsmittel zum einen als Oxidationsmittel für das Sulfit und zum anderen als Reduktionsmittel für das mit einer positiven Oxidationszahl im Komplex enthaltene Gold. Das Sulfit wird vorzugsweise zu Sulfat oxidiert und das im Komplex enthaltene Gold, vorzugsweise Gold-(I), wird zu seiner metallischen Form reduziert.

Als Goldsulfitbäder werden im Sinne der Erfindung alle vorzugsweise wässrigen Gold- oder Goldlegierungsbäder auf Sulfitbasis mit oder ohne Zusätzen, Additiven oder Verunreinigungen verstanden.

Durch die erfindungsgemäße Oxidation des Sulfits wird der wasserlösliche Goldsulfit-Komplex zerstört, wobei das Gold im wesentlichen in reiner Form als metallischer Goldniederschlag ausfällt. Bei reduktiven Verfahren hingegen, bei denen ein Reduktionsmittel zur Reduktion des im Komplex enthaltenen Sulfits zugegeben und somit der Goldsulfit-Komplex zerstört wird, kann zum einen giftiger und geruchsbelästigender Schwefelwasserstoff (H₂S) entstehen und zum anderen können im Bad eventuell enthaltene Legierungsmetalle, wie Mangan, mit ausgefällt werden und den Goldniederschlag verunreinigen. Der anfallende Goldniederschlag kann zudem mit Goldsulfid verunreinigt sein. Beim erfindungsgemäßen Verfahren ist dies nicht der Fall, es entsteht also keine Geruchsbelästigung und das ausgefällte Gold liegt in reiner Form vor.

Mit dem erfindungsgemäßen Verfahren ist es möglich, Goldbäder aufzubereiten, die einen alkalischen, neutralen oder sauren pH-Wert haben. Vorzugsweise wird jedoch die Aufarbeitung im sauren Milieu, insbesondere leicht saurem Milieu (pH unter 7 bis 5) durchgeführt. Bevorzugte einsetzbare Goldsulfitbäder besitzen häufig einen leicht alkalischen pH-Wert. Gegebenenfalls kann der pH-Wert durch Zugabe entsprechender Substanzen, ggf. bereits durch Wahl des Oxidationsmittels (schwach) sauer eingestellt werden.

Grundsätzlich können mit dem erfindungsgemäßen Verfahren alle bereits bekannten galvanischen Gold- oder Goldlegierungsbäder auf Sulfitbasis mit einem Goldgehalt von > 0 g/l bis 80 g/l, insbesondere von 2 g/l bis 40 g/l, also gerade auch hochkonzentrierte Goldsulfitbäder (oxidativ) aufgearbeitet werden.

Als Oxidationsmittel kann jede Verbindung eingesetzt werden, die in der Lage ist, das im Komplex enthaltene Sulfit zu oxidieren und zugleich das im Komplex enthaltene Gold zu reduzieren. Das Oxidationsmittel ist also in der elektrochemischen Spannungsreihe zwischen Sulfit und Gold eingeordnet. Das Normalpotential des Oxidationsmittels muß also positiver als das des Sulfits und negativer als das des Goldes sein. Bevorzugt wird als Oxidationsmittel Wasserstoffperoxid (H₂O₂) eingesetzt. Es kann allein oder in Kombination mit anderen Oxidationsmitteln zugegeben werden. Das Wasserstoffperoxid ist in jedem Verhältnis mit einem wässrigen Goldsulfitbad mischbar. Es kann in jeder handelsüblichen Konzentration eingesetzt werden. Insbesondere wird eine 3 gew.%ige bis 15 gew.%ige, vorzugsweise 5 gew.%ige bis 10 gew.%ige, wässrige Wasserstoffperoxidlösung verwendet. Die Zugabe von Wasserstoffperoxid bietet den Vorteil, daß Wasserstoffperoxid ein Oxidationsmittel ist, das keine zusätzlichen Bestandteile enthält, wie z.B. metallische und/oder sonstige Bestandteile, die zu Verunreinigungen des Goldes führen und/oder ökologisch bedenklich sind. Somit fallen bei dessen Zersetzungsreaktion mit dem Goldsulfit-Komplex keine (weiteren) Metallbestandteile aus.

Es ist auch möglich, eine Verbindung als Oxidationsmittel einzusetzen, die bei der Umsetzung Wasserstoffperoxid "freisetzt". Diese Verbindung kann alleine oder in Kombination mit anderen Oxidationsmitteln, vorzugsweise Wasserstoffperoxid selbst, zugegeben werden. Als entsprechende Verbindungen können sogenannte Per-Verbindungen oder Peroxoverbindungen zugegeben werden.

Einsetzbar sind beispielsweise Per(oxo)borate, wie Natriumperborat oder Calciumperborat oder Per(oxo)carbonate, wie Natriumper(oxo)carbonat. Insbesondere werden beim erfindungsgemäßen Verfahren beispielsweise Peroxodisulfat, Peroxoharnstoff (Harnstoff-H₂O₂) oder insbesondere Kalium-Peroxo-Monosulfat (KPMS) eingesetzt. Durch die Zugabe von Kalium-Peroxo-Monosulfat ist es möglich, das Ende der Reaktion zu detektieren, da dieses leicht, beispielsweise mit Kaliumjodidstärkepapier, im Goldbad nachgewiesen werden kann. Es ist also möglich, nicht-zersetztes, im Überschuß vorhandenes Kalium-Peroxo-Monosulfat im Goldbad zu detektieren, um festzustellen, ob das im Komplex enthaltene Gold vollständig ausgefallen ist. Somit kann substanzsparend gearbeitet werden. Darüber hinaus hat die Verwendung von KPMS den Vorteil, daß sich ein Kalium-Peroxo-Monosulfat-Überschuß nach einer kurzen Zeit, beispielsweise bei pH 6 nach 1 bis 2 Stunden, durch Zersetzung von alleine vollständig abbauen kann.

Oxidationsmittel können erfindungsgemäß entweder auf einmal oder auch portionsweise, das heißt in Teilmengen, dem Goldbad zugegeben werden.

Beim erfindungsgemäßen Verfahren werden vorzugsweise mehrere, insbesondere zwei Oxidationsmittel zugegeben. Es ist möglich, die Oxidationsmittel zusammen, also in einem einstufigen Verfahren, zuzugeben, bevorzugt ist jedoch, daß die einzelnen Oxidationsmittel insbesondere mit (geringer) zeitlicher Verzögerung nacheinander zugegeben werden. Beispielsweise wird das Verfahren mit mindestens zwei Oxidationsmittel in mindestens zwei Schritten durchgeführt, wobei vorzugsweise zunächst in einem ersten Schritt mindestens ein erstes Oxidationsmittel zugegeben wird und anschließend in einem zweiten Schritt mindestens ein zweites Oxidationsmittel zugegeben wird.

Bei der Zugabe von Oxidationsmittel kann dabei die Reaktionszeit des ersten Oxidationsmittels mit dem Goldbad abgewartet werden und nach ggf. vollständiger Zersetzung des ersten Oxidationsmittels das zweite Oxidationsmittel zugegeben werden.

Beim erfindungsgemäßen Verfahren wird vorzugsweise als erstes Oxidationsmittel Wasserstoffperoxid und als zweites Oxidationsmittel eine Peroxoverbindung, insbesondere Kalium-Peroxo-Monosulfat zugegeben. Wasserstoffperoxid ist gegenüber Kalium-Peroxo-Monosulfat ein schwächeres Oxidationsmittel. Man kann zwar mit Wasserstoffperoxid alles Gold im Bad ausfällen, jedoch wird es vorzugsweise dazu verwendet, die Reaktion im Goldbad in Gang zu setzen. Die eingesetzte Menge Wasserstoffperoxid kann dabei so variiert werden, daß es nur als Starter wirkt bis hin zu der zum Abbau der Hauptmenge des Komplexes nötigen Menge. Das Oxidationsmittel Wasserstoffperoxid weist keine zusätzlichen Bestandteile, z.B. metallische und/oder sonstige Bestandteile, auf, so daß bei seiner Zersetzung beispielsweise kein Metall ausfällt und ggf. den Goldniederschlag verunreinigen könnte. Prinzipiell ist es auch möglich, die Aufarbeitung des Goldbades mit Kalium-Peroxo-Monosulfat alleine durchzuführen, jedoch weist Kalium-Peroxo-Monosulfat eine geringe Wirksamkeit auf, so daß eine größere Menge dieser Verbindung eingesetzt werden müßte, um das im Komplex enthaltene Gold vollständig auszufällen. Ferner ist dann das ausgefällte Gold mit Salzen vermengt, die sich nachteilig auf die folgende Nachbehandlung des ausgefällten Goldes auswirken können. Sie sind nur durch häufiges Waschen des Niederschlags mit Wasser zu beseitigen. Daher wird Kalium-Peroxo-Monosulfat vorzugsweise als zweites Oxidationsmittel zugegeben. Im Gegensatz zum Wasserstoffperoxid kann Kalium-Peroxo-Monosulfat im Goldbad leicht nachgewiesen und somit das Ende der Reaktion, also das Ausfallen des gesamten im Komplex enthaltenen Goldes durch Nachweis eines KPMS-Überschusses detektiert werden.

Mit dem erfindungsgemäßen Verfahren ist es möglich, das im Komplex enthaltene Gold nach Wahl teilweise oder vollständig auszufällen. Bevorzugt wird jedoch so viel Oxidationsmittel zugegeben, wie stöchiometrisch benötigt wird, um das im Komplex enthaltene (Rest)Gold vollständig auszufällen. Unter vollständig ausgefällt wird im Sinne der Anmeldung verstanden, daß nach dem Ausfällen zumindest weniger als 0,5 g/l insbesondere weniger als 0,5 mg/l Gold im Filtrat des Bades enthalten sind. Die Menge kann ggf. auch so bemessen sein, um ein ungebrauchtes Goldbad komplett auszufällen. Vorzugsweise wird zuerst Wasserstoffperoxid, vorzugsweise in handelsüblichen Konzentrationen, insbesondere 3 gew.%ige bis 15 gew.%ige, vorzugsweise 5 gew.%ige bis 10 gew.%ige, wässrige Wasserstoffperoxidlösung, zugegeben, um 10 % bis 90 %, vorzugsweise 60 % bis 90 % und insbesondere 70 % bis 80 % des Restgoldes auszufällen. Danach wird vorzugsweise Kalium-Peroxo-Monosulfat zugegeben, um 10 % bis 90 %, vorzugsweise 10 % bis 40 % und insbesondere 20 % bis 30 %, des Restgoldes auszufällen.

Beim erfindungsgemäßen Verfahren ist die Reaktion im Bad im allgemeinen temperaturunabhängig. Es ist aber möglich, daß die Reaktion bei erhöhter Temperatur durchgeführt wird. Bei einem Verfahren in mehreren Schritten wird mindestens ein Schritt, insbesondere der erste Schritt, bei erhöhter Temperatur durchgeführt. Die Erhöhung der Temperatur kann auf zweierlei Weise bewirkt werden. Zum einen kann das Bad auf eine gegenüber der Umgebungstemperatur höhere Temperatur erwärmt werden, um somit ggf. die Umsetzung schneller ablaufen zu lassen, zum anderen kann durch Zugabe von exotherm reagierenden Oxidationsmitteln, beispielsweise Wasserstoffperoxid, die Temperatur im Bad steigen. Wird wässrige Wasserstoffperoxidlösung als erstes Oxidationsmittel zugegeben, kann sich das Bad je nach zugegebener Menge und Verdünnungsgrad des Wasserstoffperoxids auf 30 °C bis 90 °C, insbesondere 40 °C bis 50 °C, erwärmen. Für eine von außen vorgenommene Erwärmung ist der bevorzugte Temperaturbereich 30 °C bis 60 °C.

Das Goldbad kann einer Vor- und/oder Nachbehandlung unterzogen werden. So ist es möglich, vor Zugabe des Oxidationsmittels das Goldbad insbesondere mit Wasser zu verdünnen. Nach Aufarbeitung des Goldbades kann der ausgefallene Goldniederschlag vom Goldbad abgetrennt, beispielsweise abfiltriert oder dekantiert werden. Der Niederschlag kann ggf. noch mit Wasser gewaschen werden. Danach kann das abgetrennte Gold thermisch nachbehandelt, beispielsweise ausgeglüht und somit zu einem "Nugget" aufgearbeitet werden.

Im folgenden dargestellt ist die Ausrüstung (Kit) zur beschriebenen Aufarbeitung des Goldbades. Die Ausrüstung weist mindestens ein Oxidationsmittel zur Oxidation des im Komplex enthaltenen Sulfits und zur Reduktion des im Komplex enthaltenen Goldes auf. Vorzugsweise weist die Ausrüstung zwei Oxidationsmittel auf. Diese zwei Oxidationsmittel sind vorzugsweise Wasserstoffperoxid und eine Wasserstoffperoxid freisetzende Verbindung, insbesondere eine Peroxoverbindung. Dabei werden vorzugsweise eine 3 gew.%ige bis 15 gew.%ige, insbesondere 5 gew.%ige bis 10 gew.%ige, Wasserstoffperoxidlösung und Kalium-Peroxo-Monosulfat eingesetzt. Die Ausrüstung kann eine Portionspackung sein, in der vorzugsweise zwei Behälter, insbesondere zwei Fläschchen, der bezeichneten Oxidationsmittel enthalten sind. Die Ausrüstung zeichnet sich dadurch aus, daß je nach Menge des aufzuarbeitenden Goldbades auch einfachste Behälter, zum Beispiel Meßbecher oder dergleichen, verwendet werden können, die insbesondere bei der Aufarbeitung der dentalen Goldbäder für einfachste und sichere Handhabung des Verfahrens sorgen.

Bei der Ausrüstung sind die Mengen an Oxidationsmittel, insbesondere auch bei der Verwendung von H₂O₂ und KPMS, vorzugsweise unter Sicherheitsaspekten für den Anwender (insbesondere in der Dentaltechnik), ausgewählt oder auswählbar. Insbesondere Konzentration und Menge an H₂O₂ wird so eingestellt, daß die behandelte Lösung nicht zu warm wird. Außerdem sollte vorzugsweise kein brauner Goldniederschlag direkt nach Zugabe des H₂O₂ auftreten, um den Reaktionsverlauf bzw. das Reaktionsende besser detektieren zu können. Auf die obigen Ausführungen zum erfindungsgemäßen Verfahren (H₂O₂ als Starter und dergleichen) wird Bezug genommen.

Ferner umfaßt die Erfindung die Verwendung eines Oxidationsmittels zur Aufarbeitung eines Goldsulfitbades gemäß Anspruch 14, wobei das Oxidationsmittel in der Lage ist, Sulfit in einem Goldsulfit-Komplex zu oxidieren und Gold in einem Goldsulfit-Komplex zu seiner metallischen Form zu reduzieren. Es werden vorzugsweise zwei Oxidationsmittel verwendet, insbesondere Wasserstoffperoxid und Kalium-Peroxo-Monosulfat. Hier wird ausdrücklich auf die bisherige Beschreibung verwiesen und Bezug genommen.

Die Erfindung stellt auch bereit ein aufgearbeitetes Goldsulfitbad, einen Goldschlamm und Reingold, die nach dem beschriebenen erfindungsgemäßen Verfahren erhältlich sind. Auch hier wird ausdrücklich auf die bisherige Beschreibung verwiesen und Bezug genommen.

Die Vorteile der Erfindung liegen darin, daß mit dem erfindungsgemäßen Verfahren alle bereits bekannten galvanischen Gold- oder Goldlegierungsbäder auf Sulfitbasis in einfacher Weise aufgearbeitet werden können. Es ist lediglich notwendig, das geeignete Oxidationsmittel, das in der Lage ist, das Sulfit im Komplex zu oxidieren und das Gold im Komplex zu reduzieren, in das Bad zu geben. Dabei hat sich ein zweistufiges Verfahren mit Wasserstoffperoxid und Kalium-Peroxo-Monosulfat als besonders geeignet erwiesen. Es kann also zunächst Wasserstoffperoxid, insbesondere wässrige Wasserstoffperoxidlösung, zugegeben werden, um die Reaktion in Gang zu setzen und die Hauptmenge des Goldes auszufällen. Danach kann Kalium-Peroxo-Monosulfat zugegeben werden, um das restliche, im Komplex enthaltene Gold zu reduzieren und ggf. ein Ende der Reaktion zu detektieren. Die beiden Oxidationsmittel können in einem geeigneten Kit bereitgestellt werden. Auf dem Kit kann angegeben sein, für wieviel Milliliter Goldbad welche Mengen an Wasserstoffperoxid und Kalium-Peroxo-Monosulfat einzusetzen sind. Entsprechende Mengen können auch bereits vorportioniert bereitgestellt sein. Zur Durchführung des erfindungsgemäßen Verfahrens ist es also nur notwendig, eine bestimmte Menge Goldbad vorzulegen, Oxidationsmittel hineinzugeben, ggf. zu rühren und zu warten, bis das Gold in metallischer Form ausfällt. Dem Anwender des Verfahrens bleibt es überlassen, den Goldniederschlag als Goldschlamm oder als Reingold zu verwerten, beispielsweise an eine Scheideanstalt zurückzugeben.

### Beispiele

Bei den folgenden Anwendungsbeispielen werden Goldsulfitbäder bzw. entsprechende Restgoldbäder aus dem AGC® -Verfahren oder AGC®-Speed-Verfahren der Anmelderin (dentale Galvanotechnik) mit dem erfindungsgemäßen Verfahren aufbereitet.

Die zur Aufbereitung verwendete Apparatur besteht aus einem 1000 ml bzw. 2000 ml-Messbecher, einem Trichter mit Filter, einem Auffanggefäß für Filtrat und einem Rührstab.

Die Angaben zum Goldgehalt der Goldsulfitlösung bzw. der Restgoldbäder beziehen sich zum einen auf den Goldgehalt vor Durchführung des AGC®-Verfahrens, also auf ein ungebrauchtes Goldbad und zum anderen auf den Goldgehalt nach Durchführung dieses Verfahrens.

### Beispiel 1:

Zusammensetzung:

| | |
|---|---|
| 800 ml | Goldsulfitlösung (Restgoldgehalt ca. 14 g/l einer ursprünglichen Lösung mit Goldgehalt ca. 50 g/l) |
| 800 ml | Wasser |
| 200 ml | Wasserstoffperoxid H₂O₂ (7 gew.%ig) |
| 20 g | Kalium-Peroxo-Monosulfat |

### Durchführung:

800 ml der aufzuarbeitenden Restgoldlösung werden vorgelegt und 1:1 mit 800 ml Wasser verdünnt. Nun werden 200 ml Wasserstoffperoxid H₂O₂ (7 gew.%ig) zugegeben und es wird kurz umgerührt. Die Lösung erwärmt sich dabei auf ca. 45 °C. Es wird eine Stunde gewartet. Dann sind ca. 80 % des im Bad enthaltenen Goldes ausgefällt. Im nächsten Schritt werden 20 g Kalium-Peroxo-Monosulfat (KPMS) zugegeben und es wird kurz gerührt. Die Lösung färbt sich dabei durch das ausgefallene Gold braun. Das ausgefallene Gold wird abfiltiert oder abdekantiert.

### Beispiel 2:

### Zusammensetzung:

| | |
|---|---|
| 400 ml | Goldsulfitlösung (Restgoldgehalt ca. 10 g/l einer ursprünglichen Lösung mit Goldgehalt ca. 40 g/l) |
| 400 ml | Wasser |
| 80 ml | H₂O₂ (7 gew.%ig) |
| 80 g | KPMS |

### Durchführung:

400 ml der aufzuarbeitenden Restgoldflüssigkeit werden in einen 1L-Messbecher vorgelegt und 1:1 mit 400 ml Wasser verdünnt. Nun werden 80 ml H₂O₂ (7 gew.-%ig) zugegeben und es wird kurz umgerührt. Die Lösung erwärmt sich dabei auf ca. 40 °C. Es wird eine Stunde gewartet, wonach die Temperatur auf 30 °C zurückgegangen ist. Im nächsten Schritt werden 80 g KPMS zugegeben, es wird kurz gerührt, die Temperatur erhöht sich wieder auf 45 °C. Die Lösung färbt sich dabei durch das ausgefallene Gold braun.
Die Lösung wird über Nacht stehen gelassen, wodurch sich der Goldniederschlag am Boden des Messbechers absetzt.
Das ausgefallene Gold wird abdekantiert oder abfiltriert, der Niederschlag mit Wasser gewaschen und an Luft getrocknet.
Der Goldniederschlag kann geschmolzen werden, wodurch man einen goldgelben Nugget erhält.

### Beispiel 3:

### Zusammensetzung:

| | |
|---|---|
| 1000 ml | Goldsulfitlösung (Restgoldgehalt ca. 3 g/l einer ursprünglichen Lösung mit Goldgehalt ca. 15 g/l) |
| 500 ml | Wasser |
| 100 ml | H₂O₂ (7 gew.%ig) |
| 125 g | KPMS |

### Durchführung:

1000 ml der aufzuarbeitenden Restgoldflüssigkeit werden in einen 2L Messbecher vorgelegt und 2:1 mit 500 ml Wasser verdünnt. Nun werden 100 ml H₂O₂ (7 gew.%ig) zugegeben und es wird kurz umgerührt. Die Lösung erwärmt sich dabei auf ca. 33 °C. Im nächsten Schritt werden 125 g KPMS zugegeben, es wird kurz gerührt, die Temperatur erhöht sich auf 49 °C. Die Lösung färbt sich dabei durch das ausgefallene Gold braun.

Die Lösung wird über Nacht stehen gelassen, wodurch sich der Goldniederschlag am Boden des Messbechers absetzt.

Das ausgefallene Gold wird abdekantiert oder abfiltiert, der Niederschlag mit Wasser gewaschen und an Luft getrocknet.

Der Goldniederschlag kann geschmolzen werden, wodurch man einen goldgelben Nugget erhält.

### Beispiel 4:

### Zusammensetzung:

| | |
|---|---|
| 400 ml | Goldsulfitlösung gemäß Beispiel 2 |
| 400 ml | Wasser |
| 80 ml | H₂O₂ (7 gew.%ig) |
| 80 g | Kaliumperoxodisulfat (KPDS) |

### Durchführung:

400 ml der aufzuarbeitenden Restgoldflüssigkeit werden in einen 1L-Messbecher vorgelegt und 1:1 mit 400 ml Wasser verdünnt. Nun werden 80 ml H₂O₂ (7 gew.-%ig) zugegeben und es wird kurz umgerührt. Die Lösung erwärmt sich dabei. Es wird eine Stunde gewartet, wonach die Temperatur zurückgegangen ist. Im nächsten Schritt werden 80 g KPDS zugegeben, es wird kurz gerührt, die Temperatur erhöht sich dabei wieder. Die Lösung färbt sich dabei durch das ausgefallene Gold braun.
Die Lösung wird über Nacht stehen gelassen, wodurch sich der Goldniederschlag am Boden des Messbechers absetzt.
Das ausgefallene Gold wird abdekantiert oder abfiltriert, der Niederschlag mit Wasser gewaschen und an Luft getrocknet.
Der Goldniederschlag kann geschmolzen werden, wodurch man einen goldgelben Nugget erhält.

### Beispiel 5:

### Zusammensetzung:

| | |
|---|---|
| 400 ml | Goldsulfitlösung gemäß Beispiel 2 |
| 400 ml | Wasser |
| 350 g | KPMS |

### Durchführung:

400 ml der aufzuarbeitenden Restgoldflüssigkeit werden in einen 1L-Messbecher vorgelegt und 1:1 mit 400 ml Wasser verdünnt. Es werden 350 g KPMS zugegeben und kurz umgerührt. Dabei erhöht sich die Temperatur. Die Lösung färbt sich dabei durch das ausgefallene Gold braun.
Die Lösung wird über Nacht stehen gelassen, wodurch sich der Goldniederschlag am Boden des Messbechers absetzt.
Das ausgefallene Gold wird abdekantiert oder abfiltriert, der Niederschlag mit Wasser gewaschen und an Luft getrocknet.
Der Goldniederschlag kann geschmolzen werden, wodurch man einen goldgelben Nugget erhält.

## Patentansprüche

1. Verfahren zur Aufarbeitung eines Goldbades oder eines Goldlegierungsbades, das Gold in Form eines Goldsulfit-Komplexes enthält, **dadurch gekennzeichnet, daß** mindestens ein Oxidationsmittel zugegeben wird, das das im Komplex enthaltene Sulfit oxidiert und das im Komplex enthaltene Gold zu seiner metallischen Form reduziert.

2. Verfahren nach Anspruch 1, **dadurch gekennzeichnet, daß** es sich bei dem Oxidationsmittel um Wasserstoffperoxid, vorzugsweise um eine 3 gew.%ige bis 15 gew. %ige, insbesondere 5 gew.%ige bis 10 gew.%ige Wasserstoffperoxidlösung, handelt.

3. Verfahren nach Anspruch 1 oder 2, **dadurch gekennzeichnet, daß** es sich bei dem Oxidationsmittel um eine Wasserstoffperoxid freisetzende Verbindung, vorzugsweise eine Peroxoverbindung, handelt.

4. Verfahren nach Anspruch 3, **dadurch gekennzeichnet, daß** es sich bei dem Oxidationsmittel um Peroxodisulfat, Peroxoharnstoff und/oder insbesondere Kalium-Peroxo-Mono sulfat, handelt.

5. Verfahren nach einem der vorhergehenden Ansprüche, **dadurch gekennzeichnet, daß** mehrere, insbesondere zwei, Oxidationsmittel zugegeben werden.

6. Verfahren nach einem der vorhergehenden Ansprüche, **dadurch gekennzeichnet, daß** das Oxidationsmittel portionsweise zugegeben wird.

7. Verfahren nach einem der vorhergehenden Ansprüche, **dadurch gekennzeichnet, daß** das Verfahren mit mindestens zwei Oxidationsmitteln in mindestens zwei Schritten durchgeführt wird, wobei vorzugsweise zunächst in einem ersten Schritt mindestens ein erstes Oxidationsmittel zugegeben wird und anschließend in einem zweiten Schritt mindestens ein zweites Oxidationsmittel zugegeben wird.

8. Verfahren nach Anspruch 7, **dadurch gekennzeichnet, daß** als erstes Oxidationsmittel Wasserstoffperoxid zugegeben wird.

9. Verfahren nach Anspruch 7 oder Anspruch 8, **dadurch gekennzeichnet, daß** als zweites Oxidationsmittel eine Peroxoverbindung, vorzugsweise Kalium-Peroxo-Monosulfat, zugegeben wird.

10. Verfahren nach einem der Ansprüche 7 bis 9, **dadurch gekennzeichnet, daß** soviel erstes Oxidationsmittel, vorzugsweise Wasserstoffperoxid, zugegeben wird, um 60 % bis 90 %, vorzugsweise 70 % bis 80 % des im Komplex enthaltenen Goldes zu reduzieren und soviel zweites Oxidationsmittel, vorzugsweise Kalium-Peroxo-Monosulfat, zugegeben wird, um 10 % bis 40 %, vorzugsweise 20 % bis 30 % des im Komplex enthaltenen Goldes zu reduzieren.

11. Verfahren nach einem der vorhergehenden Ansprüche, **dadurch gekennzeichnet, daß** das Verfahren, vorzugsweise bei einem Verfahren in mehreren Schritten, mindestens ein Schritt, insbesondere der erste Schritt, bei erhöhter Temperatur durchgeführt wird.

12. Verfahren nach einem der vorhergehenden Ansprüche, **dadurch gekennzeichnet, daß** das Goldbad vor Zugabe des Oxidationsmittels verdünnt, vorzugsweise mit Wasser verdünnt wird.

13. Verfahren nach einem der vorhergehenden Ansprüche, **dadurch gekennzeichnet, daß** das in metallischer Form vorliegende Gold abgetrennt und dann insbesondere thermisch nachbehandelt, vorzugsweise ausgeglüht wird.

14. Verwendung mindestens eines Oxidationsmittels zur Aufarbeitung eines Goldbades oder eines Goldlegierungsbades, das Gold in Form eines Goldsulfit-Komplexes enthält, wobei das Oxidationsmittel das im Komplex enthaltene Sulfit oxidiert und das im Komplex enthaltene Gold zu seiner metallischen Form reduziert.

15. Verwendung nach Anspruch 14, **dadurch gekennzeichnet, daß** mindestens zwei Oxidationsmittel verwendet werden.

16. Verwendung nach Anspruch 14 oder 15, **dadurch gekennzeichnet, daß** es sich um ein Oxidationsmittel wie in den Ansprüchen 2 bis 4 definiert, handelt.

## Claims

1. Method for reprocessing a gold bath or a gold alloy bath comprising gold in the form of a gold sulphite complex, **characterized in that** at least one oxidizing agent is added which oxidizes the sulphite present in the complex and which reduces the gold present in the complex to its metallic form.

2. Method according to Claim 1, **characterized in that** the oxidizing agent is hydrogen peroxide, preferably a 3% by weight to 15% by weight, especially 5% by weight to 10% by weight, hydrogen peroxide solution.

3. Method according to Claim 1 or 2, **characterized in that** the oxidizing agent is a compound which releases hydrogen peroxide, preferably a peroxo compound.

4. Method according to Claim 3, **characterized in that** the oxidizing agent is peroxodisulphate, urea hydrogen peroxide and/or, for example, potassium peroxomonosulphate.

5. Method according to one of the preceding claims, **characterized in that** several, in particular two, oxidizing agents are added.

6. Method according to one of the preceding claims, **characterized in that** the oxidizing agent is added portionwise.

7. Method according to one of the preceding claims, **characterized in that** the method with at least two oxidizing agents is carried out in at least two stages, in which, preferably, first of all, in a first stage, at least one first oxidizing agent is added and, subsequently, in a second stage, at least one second oxidizing agent is added.

8. Method according to Claim 7, **characterized in that** hydrogen peroxide is added as first oxidizing agent.

9. Method according to Claim 7 or Claim 8, **characterized in that** a peroxo compound, preferably potassium peroxomonosulphate, is added as second oxidizing agent.

10. Method according to one of Claims 7 to 9, **characterized in that** enough first oxidizing agent, preferably hydrogen peroxide, is added to reduce 60% to 90%, preferably 70% to 80%, of the gold present in the complex and enough second oxidizing agent, preferably potassium peroxomonosulphate, is added to reduce 10% to 40%, preferably 20% to 30%, of the gold present in the complex.

11. Method according to one of the preceding claims, **characterized in that** the method, in a multi-stage method preferably at least one stage, especially the first stage, is carried out at an increased temperature.

12. Method according to one of the preceding claims, **characterized in that** the gold bath is diluted, preferably with water, before addition of the oxidizing agent.

13. Method according to one of the preceding claims, **characterized in that** the gold present in metallic form is isolated and is then subjected in particular to a thermal post-treatment, preferably an annealing.

14. Use of at least one oxidizing agent for reprocessing a gold bath or a gold alloy bath comprising gold in the form of a gold sulphite complex, in which the oxidizing agent oxidizes the sulphite present in the complex and reduces the gold present in the complex to its metallic form.

15. Use according to Claim 14, **characterized in that** at least two oxidizing agents are used.

16. Use according to Claim 14 or 15, **characterized in that** it involves an oxidizing agent as defined in Claims 2 to 4.

## Revendications

1. Procédé de mise en oeuvre d'un bain d'or ou d'un bain d'alliage d'or, qui contient de l'or sous la forme d'un complexe de sulfite d'or, **caractérisé en ce que** l'on ajoute au moins un agent d'oxydation qui oxyde le sulfite contenu dans le complexe et qui réduit à sa forme métallique l'or contenu dans le complexe.

2. Procédé selon la revendication 1, **caractérisé en ce qu'**il s'agit, dans le cas de l'agent d'oxydation, de peroxyde d'hydrogène, de préférence, d'une solution de peroxyde d'hydrogène à raison de 3% en poids à 15% en poids, en particulier à raison de 5% en poids à 10% en poids.

3. Procédé selon la revendication 1 ou 2, **caractérisé en ce qu'**il s'agit, dans le cas de l'agent d'oxydation, d'un composé libérant du peroxyde d'hydrogène, de préférence, d'un composé peroxo.

4. Procédé selon la revendication 3, **caractérisé en ce qu'**il s'agit, dans le cas de l'agent d'oxydation, de peroxo-disulfate, de peroxo-urée et/ou, en particulier, de peroxo-monosulfate de potassium.

5. Procédé selon l'une quelconque des revendications précédentes, **caractérisé en ce que** l'on ajoute plusieurs, en particulier deux, agents d'oxydation.

6. Procédé selon l'une quelconque des revendications précédentes, **caractérisé en ce que** l'agent d'oxydation est ajouté sous forme de portions successives.

7. Procédé selon l'une quelconque des revendications précédentes, **caractérisé en ce que** le procédé est effectué à l'aide d'au moins deux agents d'oxydation dans au moins deux étapes, au moins un premier agent d'oxydation étant, de préférence, d'abord ajouté dans une première étape et au moins un deuxième agent d'oxydation étant ajouté ensuite dans une deuxième étape.

8. Procédé selon la revendication 7, **caractérisé en ce que** l'on utilise, en tant que premier agent d'oxydation, le peroxyde d'hydrogène.

9. Procédé selon la revendication 7 ou la revendication 8, **caractérisé en ce que** l'on ajoute, en tant que deuxième agent d'oxydation, un composé peroxo, de préférence, du peroxo-monosulfate de potassium.

10. Procédé selon l'une quelconque des revendications 7 à 9, **caractérisé en ce que** l'on ajoute une quantité suffisante du premier agent d'oxydation, de préférence, de peroxyde d'hydrogène pour réduire de 60 % à 90 %, de préférence, de 70 % à 80 % de l'or contenu dans le complexe et une quantité suffisante du deuxième agent d'oxydation, de préférence, de peroxo-monosulfate de potassium, pour réduire de 10 % à 40 %, de préférence, de 20 % à 30 % de l'or contenu dans le complexe.

11. Procédé selon l'une quelconque des revendications précédentes, **caractérisé en ce que** le procédé, de préférence dans le cas d'un procédé à plusieurs étapes, au moins une étape, en particulier la première étape, est effectué(e) à une température plus élevée.

12. Procédé selon l'une quelconque des revendications précédentes, **caractérisé en ce que** le bain d'or est dilué avant l'addition de l'agent d'oxydation, de préférence, est dilué à l'aide d'eau.

13. Procédé selon l'une quelconque des revendications précédentes, **caractérisé en ce que** l'or présent sous forme métallique est séparé et est alors soumis à un traitement ultérieur, en particulier par voie thermique, de préférence, à une calcination.

14. Utilisation d'au moins un agent d'oxydation en vue de la mise en oeuvre d'un bain d'or ou d'un bain d'alliage d'or, qui contient de l'or sous la forme d'un complexe de sulfite d'or, l'agent d'oxydation oxydant le sulfite contenu dans le complexe et réduisant à sa forme métallique l'or contenu dans le complexe.

15. Utilisation selon la revendication 14, **caractérisée en ce que** l'on utilise au moins deux agents d'oxydation.

16. Utilisation selon la revendication 14 ou la revendication 15, **caractérisée en ce qu'**il s'agit d'un agent d'oxydation comme défini dans les revendications 2 à 4.
